# EUROPÄISCHE PATENTSCHRIFT

(11) **EP 0 795 401 B1**
(45) Veröffentlichungstag und Bekanntmachung des Hinweises auf die Patenterteilung: **09.06.1999**
(21) Anmeldenummer: 97101525.0
(22) Anmeldetag: 31.01.1997
(51) Int. Cl.: B41F 35/00, F16L 39/04

(54) **Vorrichtung zum lösbaren Verbinden von Versorgungsleitungen in einer Druckmaschine**
Device for releasably coupling supply pipes in a printing machine
Dispositif pour raccorder des tuyaux d'une façon détachable dans une machine d'impression

(30) Priorität: 13.03.1996 DE 19609737
(43) Veröffentlichungstag der Anmeldung: 17.09.1997
(73) Patentinhaber: MAN Roland Druckmaschinen AG, 63075 Offenbach (DE)
(72) Erfinder: Hildebrandt, Jörg, 60314 Frankfurt (DE); Olek, Joachim, 63179 Obertshausen (DE); Schoppe, Herbert, 86356 Neusäss (DE); Schild, Helmut, 61449 Steinbach/Taunus (DE)
(74) Vertreter: Stahl, Dietmar

(56) Entgegenhaltungen:
- DE-A- 2 938 671
- DE-A- 4 233 953
- PATENT ABSTRACTS OF JAPAN vol. 13, no. 204 (M-825), 15.Mai 1989 & JP 01 024926 A (KUBOTA LTD), 26.Januar 1989,

## Beschreibung

Vorrichtung zum lösbaren Verbinden von Versorgungsleitungen in einer Druckmaschine, vorzugsweise für Versorgungsleitungen einer Waschvonrichtung nach dem Oberbegriff des Hauptanspruches.

Eine Vorrichtung dieser Art ist aus der DE 29 38 671 C2 bekannt. Die Vorrichtung besitzt zwei Kupplungsteile, wobei ein Kupplungsteil an der in Seitengestellen aufgenommen Waschvorrichtung fest und ein weiteres Kupplungsteil am Ende eines Versorgungsstranges frei beweglich angeordnet ist.

Gemäß der DE 42 33 953 A1 ist eine Waschvorrichtung bekannt, die in einer achsparallel zu den Druckmaschinenzylindern verlaufenden Linearführung einer gestellfesten Aufhängevorrichtung aufnehmbar ist. In Waschvorrichtungslängsrichtung ist an der Waschvorrichtung selbst ein erstes Kupplungsteil mit einem zweiten Kupplungsteil an der Authängevorrichtung verbindbar, wenn die Waschvorrichtung in die Aufhängevorrichtung eingefahren wird. Die Entkopplung erfolgt durch Zurückfahren der Waschvorrichtung. Den beiden Kupplungsteilen ist eine Verriegelung zugeordnet, welche durch einen Verriegelungsstift an der Waschvorrichtung und einen Verriegelungsschlitz an der Aufhängevorrichtung im gekoppelten Zustand gebildet ist. Zur Dämpfung des Aufpralles sind Federmittel zwischen Waschvorrichtung und Aufhängevorrichtung angeordnet.

Aufgabe der Erfindung ist es, eine Vorrichtung zum lösbaren Verbinden von Versorgungsleitungen an einem beweglichen Kupplungsteil und an einem gestellfest angeordneten Kupplungsteil zu entwickeln, ohne aufwendige Linearführungen zu verwenden.

Gelöst wird dies durch die Ausbildungsmerkmale des Hauptanspruches. Weiterbildungen ergeben sich aus den Unteransprüchen.

Die erfindungsgemäße Vorrichtung gestattet das automatische Koppeln bzw. Entkoppeln der Versorgungsleitungen innerhalb einer Druckmaschine, was insbesondere an schwer zugänglichen Stellen relevant ist. Bevorzugt eignet sich die Vorrichtung für Versorgungsleitungen für Waschvorrichtungen. Darüber hinaus eignet sich die Vorrichtung auch zum Koppeln/Entkoppeln von Versorgungsleitungen in weiteren Baugruppen, beispielsweise Feucht- und/oder Lackierwerken sowie für elektrische Versorgungseinheiten.

Die Vorrichtung besteht aus zwei Kupplungsteilen, wobei ein erstes Kupplungsteil am Druckmaschinengestell befestigt und ein zweites Kupplungsteil an einer bewegbaren Baugruppe z.B. einer Waschvorrichtung, angeordnet ist. Das erste Kupplungsteil ist lediglich an einer vorgespannten Druckfeder gelagert und ist um eine gestellfeste Lagerung schwenkbar. Die Druckfeder liefert gleichzeitig den erforderlichen Anpreßdruck für die die Versorgungsleitungen tragenden Kupplungsteile. Das an der bewegten Baugruppe fixierte zweite Kupplungsteil weist eine Führungshülse auf die mit einem Zentrierbolzen des ersten Kupplungsteiles koppelbar ist.

Vorteilhaft ist, daß das gestellfeste Kupplungsteil nur an einer vorgespannten Feder aufgehängt ist und somit eine Bewegung des Kupplungsteiles in verschiedene Koordinationsrichtungen möglich ist. Weiterhin von Vorteil ist der relativ einfache Aufbau, es werden keine aufwendigen Linearführungen oder sonstige Gelenke benötigt. Der Zentrierbolzen gewährleistet eine sichere Zentrierung ohne zu verkanten und gleicht durch das schwenkbewegliche Kupplungsteil möglichen Lageversatz der anzukuppelnden Baugruppe aus.

Die Erfindung soll an einem Ausführungsbeispiel näher beschrieben werden.

Dabei zeigen:
- Fig. 1: die entkoppelte Position der beiden Kupplungsteile (Seitenansicht),
- Fig. 2: die gekoppelte Position der beiden Kupplungsteile (Seitenansicht),

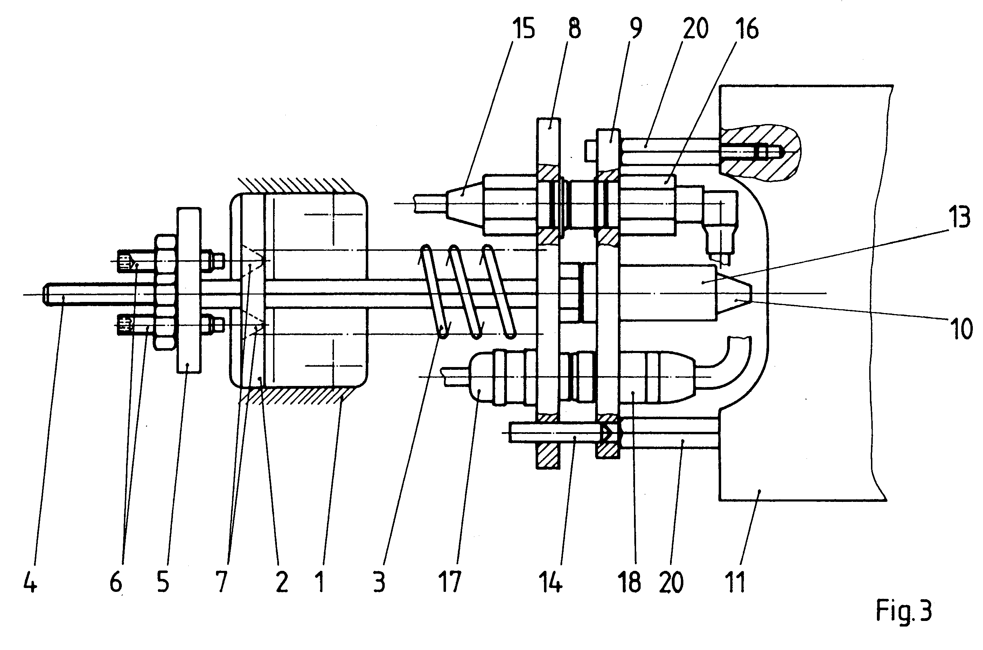

- Fig. 3: die gekoppelte Position der Kupplungsteile (Draufsicht).

Eine Druckeinheit einer Bogenoffsetdruckmaschine besteht im wesentlichen aus einem Gegendruckzylinder, der in bekannter Weise mit einem Gummituchzylinder sowie einem dem Gummituchzylinder zugeordneten Plattenzylinder in Wirkverbindung steht. Dem Plattenzylinder ist eine Farbwerk und ggf. ein Feuchtwerk zugeordnet.

Unterhalb des Gegendruckzylinders soll als eine zur Druckmaschine koppelbare Baugruppe 11 eine Waschvorrichtung angeordnet werden, die an den Gegendruckzylinder an-und abstellbar ist. Da die Platzverhältnisse unterhalb des Gegendruckzylinders beengt sind, soll die Baugruppe 11 mit ihren Versorgungsleitungen 16, 18 für Waschmittel und Wasser sowie für den Elektroanschluß (ohne Pos.-Nr.) automatisch mit den Versorgungsleitungen 15, 17 der Druckmaschine lösbar verbunden werden. Eine sichere Kopplung aller Versorgungsleitungen 15 bis 18 ist für den Waschbetrieb notwendig. Gleichzeitig müssen die Versorgungsleitungen 15 bis 18 entkoppelbar sein, da die Baugruppe (Waschvorrichtung) zur Reinigung bzw. Wartung aus der Druckmaschine herausnehmbar sein soll.

Die Versorgungsleitungen 15 bis 18 werden durch zwei plattenförmige Kupplungsteile 8,9 lösbar miteinander verbunden. An einem Maschinengestell 1, 2 ist dabei das erste Kupplungsteil 8 angeordnet, welches mit dem zweiten, an der beweglichen Baugruppe 11 angeordneten Kupplungsteil 9 in Wirkverbindung steht.

Das erste Kupplungsteil 8 weist einen zum zweiten Kupplungsteil 9 vorstehenden Zentrierbolzen auf Der Zentrierbolzen 10 fluchtet mit einem am Kupplungsteil 8 angeordneten Bolzen 4, der eine gestellfeste Halterung 2 durchdringt. Der Bolzen 4 ist von einer Druckfeder 3 konzentrisch umschlossen. Die Druckfeder 3 ist an einem Ende mit dem Kupplungsteil 8 und am anderen Ende mit der gestellfesten Halterung 2 in einer Lagerung verbunden und ist mindestens mit der erforderlichen Kupplungskraft vorgespannt. Der Bolzen 4 trägt an seinem freien Ende einen Anschlag 5 mit drei Justierelementen 6. Die Justierelemente 6 stehen im gekoppelten Zustand mit in der Halterung 2 angeordneten Zentrierungen 7 in Wirkverbindung.

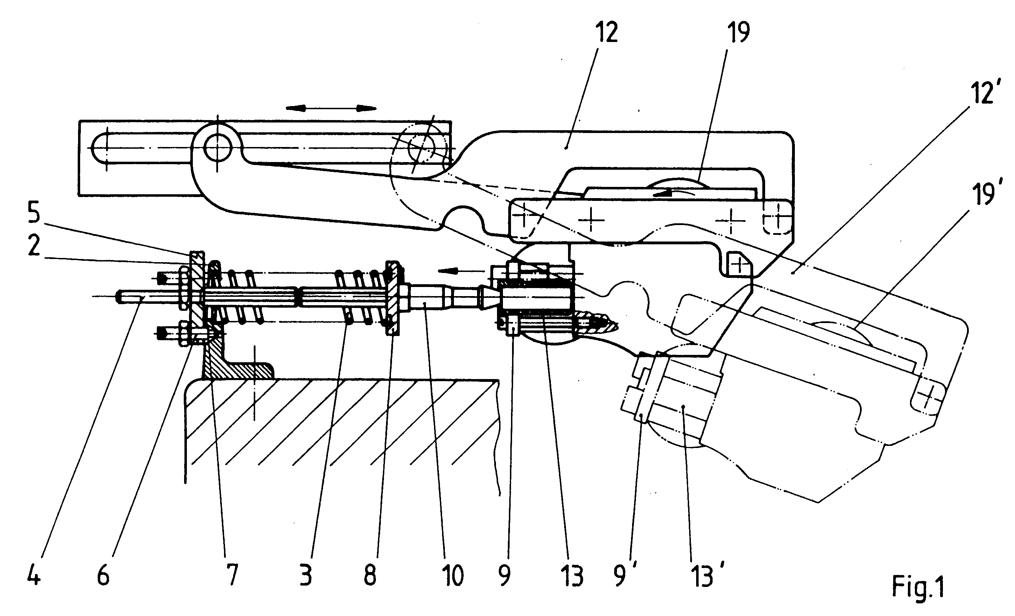

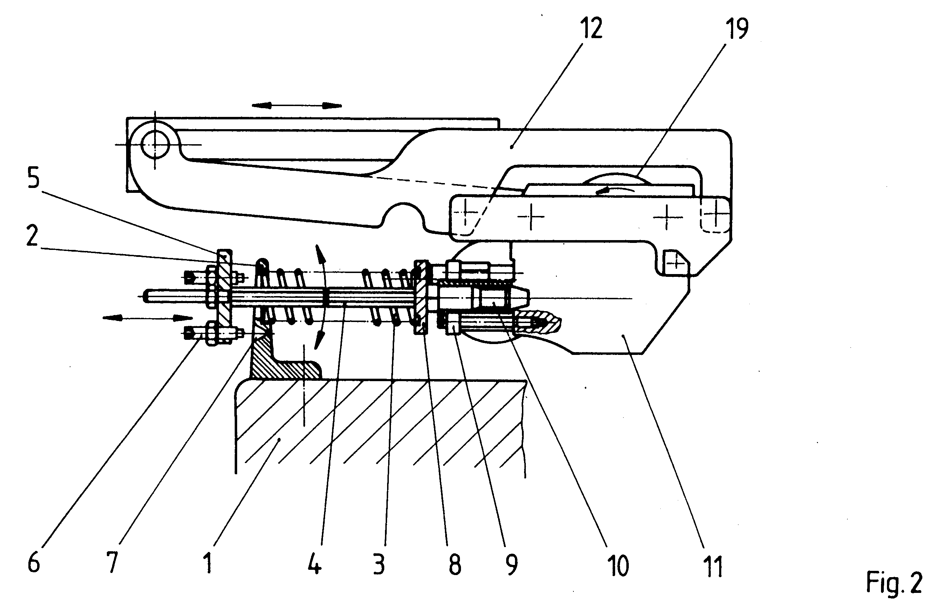

Das zweite Kupplungsteil 9 ist mit einer Führungshülse 13 verbunden. Die Führungshülse 13 sowie Kupplungsteil 9 sind an der Baugruppe 11 mittels Verbindungselementen 20 angeordnet. Das zweite Kupplungsteil ist mit den Versorgungsleitungen 16, 18 und das erste Kupplungsteil 8 ist mit den entsprechenden Versorgungsleitungen 15, 17 verbunden und weist einen Stift 14 auf, der in gleicher Richtung wie der Zentrierbolzen 10 vorsteht. Die Baugruppe 11 ist als Waschvorrichtung in einer Betätigungseinrichtung 12 aufgenommen und zeigt in Fig. 1 und 2 eine Waschbürste 19, welche mit der Waschvorrichtung an den nicht gezeigten Gegendruckzylinder an- und abstellbar ist.

Die Wirkungsweise ist wie folgt: In entkoppelter Position (Figur 1) ist die bewegbare Baugruppe 11 in der Betätigungsvorrichtung 12 aufgenommen und wird aus der Einschubposition (Stellung der Betätigungsvorrichtung 12', des Kupplungsteiles 9' und der Führungshülse 13') in eine Bereitschaftsposition geschwenkt. Die Bereitschaftsposition 12 (entkoppelte Position) wird zum Koppeln der beiden Kupplungsteile 8, 9 durch die Betätigungsvorrichtung 12, welche mittels Arbeitszylinder aktivierbar ist, verlassen. Die Baugruppe 11 wird durch die Betätigungsvorrichtung 12 auf das gestellfeste erste Kupplungsteil 8 zu bewegt. Während des Kupplungsvorganges wird der Zentrierbolzen 10 mit Kupplungsteil 8 und Bolzen 4 von der Führungshülse 13 mit Kupplungsteil 9 gegen die Kraft der Druckfeder 3 in Richtung Halterung 2 verschoben, wobei die Druckfeder 3 zusammengedrückt wird. Der Bolzen 4 mit Anschlag 5 und Justierelementen 6 wird dabei aus der Halterung 2 herausgehoben. Jedes Justierelement 6 wird aus der Zentrierung 7 herausgeschoben. Damit wird das Kupplungsteil 8 frei und ist nur an dem Ende der Druckfeder in der Lagerung der Halterung 2 aufgenommen. Dadurch ist das Kupplungsteil 8 frei beweglich und gleicht möglichen Lageversatz des Kupplungsteiles 9 aus.

In Fig. 2 ist die gekoppelte Position dargestellt. Der Justierbolzen 10 ist in die Führungshülse 13 eingedrungen und positioniert damit die Kupplungsteile 8, 9. Der Zentrierbolzen 10 weist eine Eindrehung auf, der ein Kegel vorgeordnet und eine ballige Zentrierung nachgeordnet sind. Im gekoppelten Zustand durchdringt der Stift 14 das zweite Kupplungsteil 9, so daß zusätzlich eine Verdrehsicherung geschaffen ist.

Zur Entkopplung der Versorgungsleitungen wird die Baugruppe 11 durch Arbeitszylinder in die Bereitschaftsposition zurückbewegt. Die Führungshülse 13 gleitet auf dem Zentrierbolzen 10 aus der gekoppelten Verbindung und die Druckfeder 3 entspannt sich. Über den Anschlag 5 und Justierelement 6 mit Zentrierung 7 wird das Kupplungsteil 8 in seiner entkoppelten Position an der Halterung 2 lagefixiert. Die Baugruppe 11 geht in ihre Bereitschaftsposition zurück. Während des Koppelns werden die Versorgungsleitungen in der Endlage selbsttätig geöffnet. Beim Entkoppeln verschließen sich diese selbsttätig.

### Bezugszeichenliste

- 1: Maschinengestell
- 2: Halterung
- 3: Druckfeder
- 4: Bolzen
- 5: Anschlag
- 6: Justierelement
- 7: Zentrierung
- 8: Kupplungsteil
- 9: Kupplungsteil
- 10: Zentrierbolzen
- 11: Baugruppe
- 12: Betätigungsvorrichtung
- 13: Führungshülse
- 14: Stift
- 15: Versorgungsleitung
- 16: Versorgungsleitung
- 17: Versorgungsleitung
- 18: Versorgungsleitung
- 19: Waschbürste
- 20: Verbindungselement

## Patentansprüche

1. Vorrichtung zum lösbaren Verbinden von Versorgungsleitungen in einer Druckmaschine mit zwei die Versorgungsleitungen aufnehmenden Kupplungsteilen, wobei das erste Kupplungsteil (8) am Druckmaschinengestell (1) fixiert und das zweite Kupplungsteil (9) an einer bewegbaren Baugruppe (11) angeordnet ist,
**dadurch gekennzeichnet**,
daß an dem ersten Kupplungsteil (8) ein zum zweiten Kupplungsteil (9) vorstehender Zentrierbolzen (10) angeordnet ist,
daß zwischen dem Druckmaschinengestell (1,) und dem ersten Kupplungsteil (8) eine einen mit dem Zentrierbolzen (10) fluchtenden Bolzen (4) konzentrisch umschließende Druckfeder (3) angeordnet ist,
daß der Bolzen (4) eine gestellfeste Halterung (2) am zum ersten Kupplungsteil (8) abgewandten Ende durchdringt und einen Anschlag (5) mit mindestens einem Justierelement (6) aufweist, welches mit einer gestellfesten Zentrierung (7) in Wirkverbindung steht,
daß die Druckfeder (3) an der Halterung (2) gelagert und um diese Lagerstelle mit dem ersten Kupplungsteil (8) schwenkbeweglich angeordnet ist, und
daß an dem zweiten Kupplungsteil (9) eine Führungshülse (13) angeordnet ist, welche mit dem Zentrierbolzen (10) koppelbar ist.

2. Vorrichtung nach Anspruch 1,
**dadurch gekennzeichnet**,
daß das zweite Kupplungsteil (9) an einer koppelbaren Waschvorrichtung angeordnet ist.

3. Vorrichtung nach Anspruch 1,
**dadurch gekennzeichnet**,
daß am Maschinengestell (1,) jedem Justierelement (6) eine Zentrierung (7) zugeordnet ist.

4. Vorrichtung nach Anspruch 1,
**dadurch gekennzeichnet**,
daß in der entkoppelten Position Anschlag (5) und Justierelement (6) an der Zentrierung (7) am Maschinengestell (1,) lagefixierbar sind.

5. Vorrichtung nach Anspruch 1,
**dadurch gekennzeichnet**,
daß in der gekoppelten Position Anschlag (5) und Justierelement (6) von der Zentrierung (7) getrennt sind.

6. Vorrichtung nach Anspruch 1,
**dadurch gekennzeichnet**,
daß am ersten Kupplungsteil (8) ein zum Zentrierbolzen (10) kürzerer Stift (14) zur Lagefixierung mit einer Öffnung am Kupplungsteil (9) als Verdrehsicherung korrespondiert.

## Claims

1. Device for releasably coupling supply leads in a printing press with two coupling parts receiving the supply leads, wherein the first coupling part (3) is arranged fixed to the printing press frame (1) and the second coupling part (4) to a movable module (11), characterised in that arranged on the first coupling part (8) is a centring pin (10) projecting towards the second coupling part (9),
that between the press frame (1) and the first coupling part (8) is arranged a compression spring (3) concentrically surrounding a pin (4) aligned with the centring pin (10),
that the pin (4) penetrates through a mounting (2) fixed with respect to the frame at the end turned away from the first coupling part (8) and has a stop (5) with at least one adjustment element (6), which is operationally connected with a centring (7) fixed with respect to the frame,
that the compression spring (3) is mounted on the mounting (2) and is arranged swivellably movably with the first coupling part (8) about this bearing position, and
that a guide sleeve (13) is arranged on the second coupling part (9) which can be coupled with the centring pin (10).

2. Device according to Claim 1, characterised in that the second coupling part (9) is arranged on a washing device which can be coupled.

3. Device according to Claim 1, characterised in that a centring (7) is coordinated to each adjustment element (6) on the machine frame (1).

4. Device according to Claim 1, characterised in that in the decoupled position, stop (5) and adjustment element (6) can be fixed in position against the centring (7) on the press frame (1).

5. Device according to Claim 1, characterised in that in the coupled position, stop (5) and adjustment element (6) are separated from the centring (7).

6. Device according to Claim 1, characterised in that on the first coupling part (8), a post (14) shorter relative to the centring pin (10) corresponds for position or fixation with an opening on the coupling part (9) as security against rotation.

## Revendications

1. Dispositif pour relier de façon amovible des conduits d'alimentation dans une machine d'impression, comportant deux parties de couplage recevant les conduits d'alimentation, la première partie de couplage (8) étant fixée au bâti (1) de la machine d'impression et la seconde partie de couplage (9) étant agencée sur un sous-ensemble mobile (11),
caractérisé en ce que, sur la première partie de couplage (8), il est agencé un axe de centrage (10) en saillie par rapport à la seconde partie de couplage (9), en ce que, entre le bâti de la machine d'impression (1) et la première partie de couplage (8), il est agencé un ressort de pression (3) entourant de façon concentrique un axe (4) aligné avec l'axe de centrage (10), en ce que l'axe (4) traverse un moyen de maintien (2) solidaire du bâti à l'extrémité opposée à la première partie de couplage (8) et présente une butée (5) ayant au moins un élément d'ajustage (6), qui est en liaison active avec un moyen de centrage (7) solidaire du bâti, en ce que le ressort de pression (3) est monté sur le moyen de maintien (2) et est agencé en pouvant pivoter autour de ce point d'appui avec la première partie de couplage (8), et en ce que, sur la seconde partie de couplage (9), il est agencé une douille de guidage (13) qui peut être coupée à l'axe de centrage (10).

2. Dispositif selon la revendication 1,
caractérisé en ce que la seconde partie de couplage (9) est agencée sur un dispositif de lavage qui peut être couplé.

3. Dispositif selon la revendication 1,
caractérisé en ce que, sur la bâti de machine (1), un moyen de centrage (7) est associé à chaque élément d'ajustage (6).

4. Dispositif selon la revendication 1,
caractérisé en ce que, dans la position découplée, la butée (5) et l'élément d'ajustage (6) peuvent être fixés en position sur le moyen de centrage (7) sur le bâti de machine (1).

5. Dispositif selon la revendication 1,
caractérisé en ce que, dans la position coupée, la butée (5) et l'élément d'ajustage (6) sont séparés du moyen de centrage (7).

6. Dispositif selon la revendication 1,
caractérisé en ce que, sur la première partie de couplage (8), une broche (14) plus courte par rapport à l'axe de centrage (10), pour la fixation en position, correspond à une ouverture sur la partie de couplage (9), comme sécurité en torsion.
